# EUROPEAN PATENT SPECIFICATION

(11) **EP 3 425 561 B1**
(45) Date of publication and mention of the grant of the patent: **11.10.2023**
(21) Application number: 18181630.7
(22) Date of filing: 04.07.2018
(51) Int. Cl.: G06F 18/213, G06F 18/24, G06N 7/08

(54) **STATE CLASSIFYING PROGRAM, STATE CLASSIFYING METHOD, AND STATE CLASSIFYING DEVICE**
ZUSTANDSKLASSIFIZIERUNGSPROGRAMM, ZUSTANDSKLASSIFIZIERUNGSVERFAHREN UND ZUSTANDSKLASSIFIZIERUNGSVORRICHTUNG
PROGRAMME, PROCÉDÉ ET DISPOSITIF DE CLASSIFICATION D'ÉTAT

(30) Priority: 07.07.2017 JP 2017133559
(43) Date of publication of application: 09.01.2019
(73) Proprietor: FUJITSU LIMITED, Kanagawa 211-8588 (JP)
(72) Inventor: Todoriki, Masaru, Kanagawa, 211-8588 (JP); Umeda, Yuhei, Kanagawa, 211-8588 (JP); Kobayashi, Ken, Kanagawa, 211-8588 (JP)
(74) Representative: Hoffmann Eitle

(56) References cited:
- US-A1- 2017 147 946
- MARCHESE ANDREW ET AL: "Topological learning for acoustic signal identification", 2016 19TH INTERNATIONAL CONFERENCE ON INFORMATION FUSION (FUSION), ISIF, 5 July 2016 (2016-07-05), pages 1377-1381, XP032935167, [retrieved on 2016-08-01]
- ZHANG ZHIFEI ET AL: "Early mastitis diagnosis through topological analysis of biosignals from low-voltage alternate current electrokinetics", 2015 37TH ANNUAL INTERNATIONAL CONFERENCE OF THE IEEE ENGINEERING IN MEDICINE AND BIOLOGY SOCIETY (EMBC), IEEE, 25 August 2015 (2015-08-25), pages 542-545, XP032810248, DOI: 10.1109/EMBC.2015.7318419 [retrieved on 2015-11-04]

## Description

### FIELD

The embodiments discussed herein are related to a state classifying technique.

### BACKGROUND

Identifying the states of an object based on multidimensional time series data is practiced generally.

For example, in invariant analysis, a universal relationship (referred to as invariant) is extracted from multidimensional time series data that is collected by sensors, etc., and occurrence of an abnormal condition is sensed based on the extracted universal relationship.

In a subspace method, an orthogonal basis of a subspace representing features by low dimensionality is generated in each condition from the multidimensional time series data and, based on the similarity between the orthogonal basis and the input multidimensional time series data, the state that is represented by the input multidimensional time series data is classified.

The aforementioned invariant analysis and subspace method will be complemented briefly.

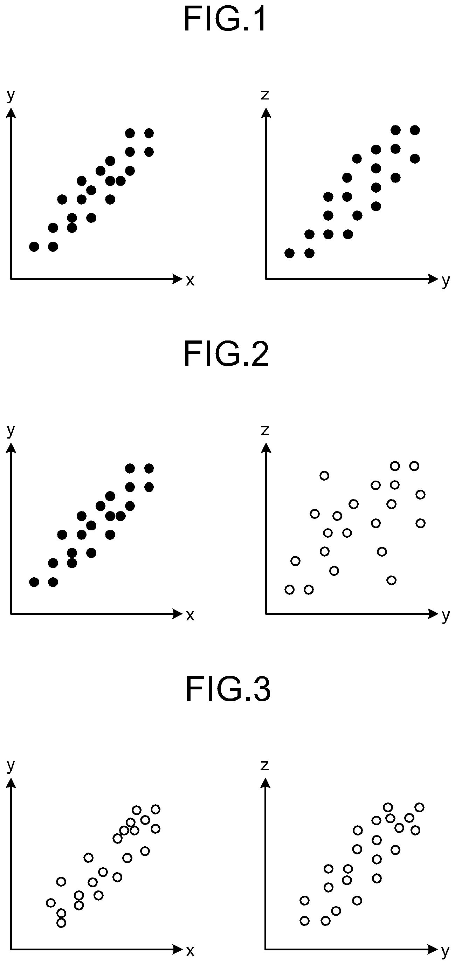

The invariant analysis is a method of monitoring the time correlation of multidimensional time series data to sense appearance of a change in part of the time series as a change of the correlation. For example, assume that, in a normal state, the correlation like that illustrated in FIG. 1 is obtained. When a change appears in the value of a variable z due to some kind of factor, the correlation like that illustrated in FIG. 2 is obtained from multidimensional time series data that is input and a change is sensed from the change of the correlation between a variable y and the variable z.

The invariant analysis can be practiced easily. Meanwhile, when all the variables change in the same direction simultaneously, sensing a change by the invariant analysis is difficult. For example, when all the variables change in the same direction simultaneously, a correlation like that illustrated in FIG. 3 may be obtained. In this case, as the difference from the correlation illustrated in FIG. 1 is not significant and thus the change is not sensed.

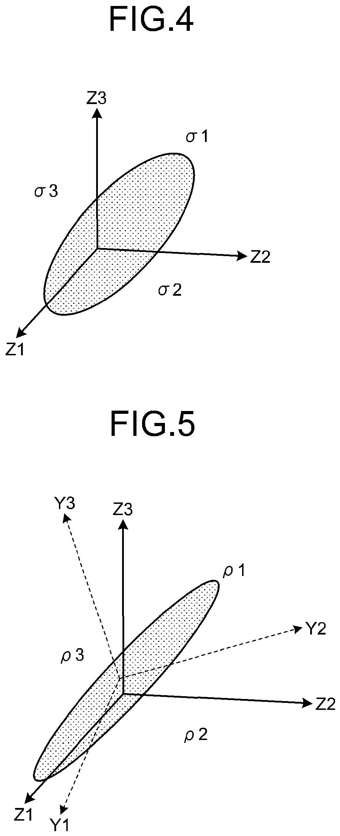

The subspace method is a method of generating a sub time series by a time-delay method from the 1-dimensional time series data and sensing a change of the condition of the whole space from the orientation and size of the orthogonal basis in the subspace that is defined by the sub time series. FIGS. 4 and 5 are diagrams to describe the sub space method. In FIGS. 4 and 5, the hatched oval represents a space to which sample points belong. In FIG. 4, σ1 denotes the size of the space to which sample points belong in a direction Z1, σ2 denotes the size in a direction Z2, and σ3 denotes the size in a direction Z3. Assume that the space to which the sample points belong varies as illustrated in FIG. 5. In FIG. 5, ρ1 denotes the size of the space to which the sample points belong in the direction Y1, ρ2 denotes the size in the direction Y2, and ρ3 denotes the size in the direction Y3. From the change of the direction and size of the orthogonal basis, it is possible to sense a change in the time series data.

The subspace method is a linear analysis method and thus is suitable for a time series with robust linearity and periodicity. Furthermore, the subspace method enables detection of change of the subspace in density. On the other hand, in a case of a non-linear time series (such as a chaos time series), the orthogonal basis differs locally and it is difficult to determine an orthogonal basis that is stable over the space. Thus, a non-linear time series is not suitable to sensing of change by the subspace method.

There is however multidimensional time series data that is not suitable to the above-described analysis method. Analysis performed on such multidimensional time series data by the above-described analysis method may cause false classification of a state. The properties of multidimensional time series data can be checked in advance in order to select an appropriate analysis method; however, even if the properties are classified, no appropriate method may be found and furthermore the work to check the properties is not necessarily easy.
Patent Document 1: International Publication Pamphlet No. WO 2013/145493

Accordingly, it is an object in one aspect of an embodiment of the invention to provide a technology that improves accuracy in classifying a state based on multidimensional time series data.

US 2017/147946 A1 relates to a method and apparatus for machine learning in order to classify data by using a pseudo attractor generated from series data. The machine learning method includes first generating a pseudo attractor from each of plural series data sets, the pseudo attractor being a set of points in N-dimensional space, each of the points including N values sampled at an equal interval. The method includes second generating a series data set of Betti numbers from each of plural pseudo attractors generated in the first generating step, each of the Betti numbers being a number of holes for a radius of a N-dimensional sphere in the N-dimensional space; and performing machine learning for each of plural series data sets of Betti numbers generated in the second generating step, the series data set of Betti numbers being used as input in the machine learning. MARCHESE ANDREW ET AL: "Topological learning for acoustic signal identification", 5 July 2016, pages 1377-1381, discloses a topological learning technique to examine the shape and topology of signals' higher dimensional embedding. ZHANG ZHIFEI ET AL: "Early mastitis diagnosis through topological analysis of biosignals from low-voltage alternate current electrokinetics", 25 August 2015, pages 542-545, discloses the representation of a biosignal through topological analysis that would reveal the intrinsic topological structure of point clouds generated from the biosignal.

### SUMMARY

The present invention is defined in the appended independent claims. Further preferred embodiments are defined in the dependent claims.

### BRIEF DESCRIPTION OF DRAWINGS

FIG. 1 is a diagram for explaining an invariant analysis;
FIG. 2 is a diagram for explaining the invariant analysis;
FIG. 3 is a diagram for explaining the invariant analysis;
FIG. 4 is a diagram for explaining a subspace method;
FIG. 5 is a diagram for explaining the subspace method;
FIG. 6 is a functional block diagram of an information processing device;
FIG. 7 is a diagram illustrating an exemplary graph of multidimensional time series data that is stored in time series data storage;
FIG. 8 is a chart illustrating a process flow of processes that are executed by the information processing device of a first embodiment;
FIG. 9 is a diagram illustrating an exemplary attractor;
FIG. 10 is a diagram illustrating an exemplary barcode chart;
FIG. 11 is a table illustrating exemplary barcode data;
FIG. 12 is a diagram for explaining a relationship between barcode data and Betti number sequence to be generated;
FIGS. 13A and 13B are diagrams illustrating exemplary barcode data;
FIG. 14 is a diagram illustrating exemplary data that is stored in a Betti number data storage;
FIGS. 15A and 15B are diagrams illustrating exemplary data that is stored in a distance data storage;
FIG. 16 is a diagram illustrating exemplary data that is stored in a sensing data storage in the first embodiment;
FIG. 17 is a diagram illustrating exemplary multidimensional time series data;
FIG. 18 is a diagram illustrating an exemplary attractor that is generated from data in the period before a change among the multidimensional time series data;
FIG. 19 is a diagram illustrating an exemplary attractor that is generated from data in the period after the change among the multidimensional time series data;
FIG. 20 is a diagram in which the attractor that is generated from the data in the period before the change and the attractor that is generated from the data in the period after the change are superimposed;
FIG. 21 is a diagram illustrating a Betti number sequence that is generated from the attractor of the period before the change and a Betti number sequence that is generated from the attractor of the period after the change;
FIG. 22 is a diagram illustrating Betti numbers at a radius that is a specific value;
FIG. 23 is a diagram illustrating a result of executing an invariant analysis;
FIG. 24 is a diagram illustrating the result of executing the invariant analysis;
FIG. 25 is a diagram illustrating the result of executing the invariant analysis;
FIG. 26 is a diagram illustrating a result of executing the subspace method;
FIG. 27 is a diagram illustrating exemplary multidimensional time series data;
FIG. 28 is a diagram illustrating an exemplary attractor that is generated from data in a period before a change among the multidimensional time series data;
FIG. 29 is a diagram illustrating the exemplary attractor that is generated from the data in the period before the change among the multidimensional time series data;
FIG. 30 is a diagram illustrating an exemplary attractor that is generated from the data in the period after the change among the multidimensional time series data;
FIG. 31 is a diagram illustrating the exemplary attractor that is generated from the data in the period after the change among the multidimensional time series data;
FIG. 32 is a diagram in which the attractor that is generated from the data in the period before the change and the attractor that is generated from the data in the period after the change are superimposed
FIG. 33 is a diagram illustrating a Betti number sequence that is generated from the attractor of the period before the change and the attractor of the period after the change;
FIG. 34 is a diagram illustrating Betti numbers at a radius that is a specific value;
FIG. 35 is a diagram illustrating a result of executing an invariant analysis;
FIG. 36 is a diagram illustrating a result of executing the subspace method;
FIG. 37 is a chart illustrating a process flow of processes that are executed by an information processing device of a second embodiment;
FIG. 38 is a diagram illustrating exemplary data that is stored in a sensing data storage in the second embodiment; and
FIG. 39 is a functional block diagram of a computer.

### DESCRIPTION OF EMBODIMENTS

Preferred embodiments will be explained with reference to accompanying drawings. The present disclosure is not limited by these embodiments.

### [a] First Embodiment

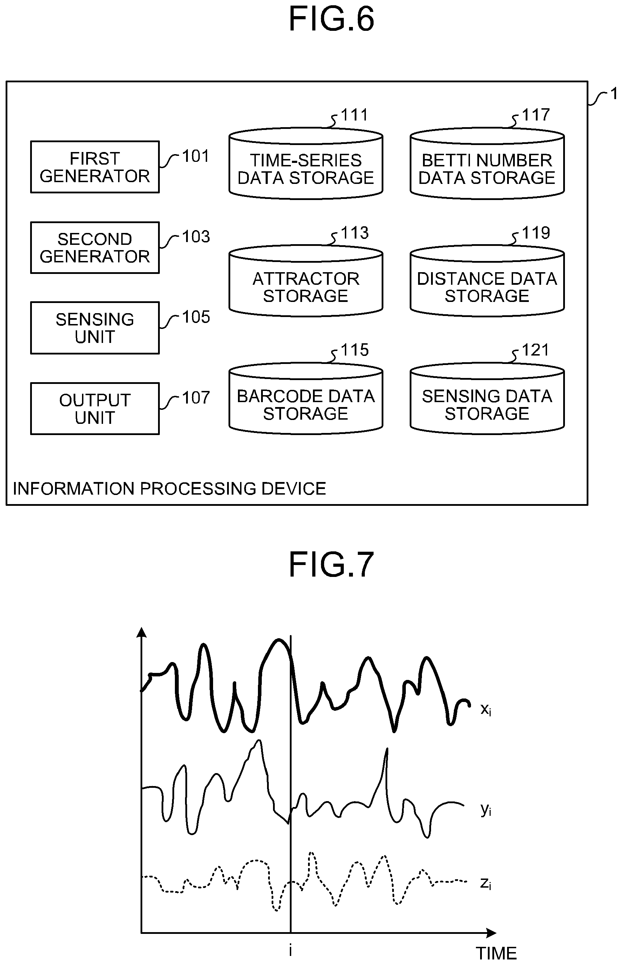

FIG. 6 is a functional block diagram of an information processing device 1 of a first embodiment. The information processing device 1 includes a first generator 101, a second generator 103, a sensing unit 105, an output unit 107, a time series data storage 111, an attractor storage 113, a barcode data storage 115, a Betti number data storage 117, a distance data storage 119 and a sensing data storage 121.

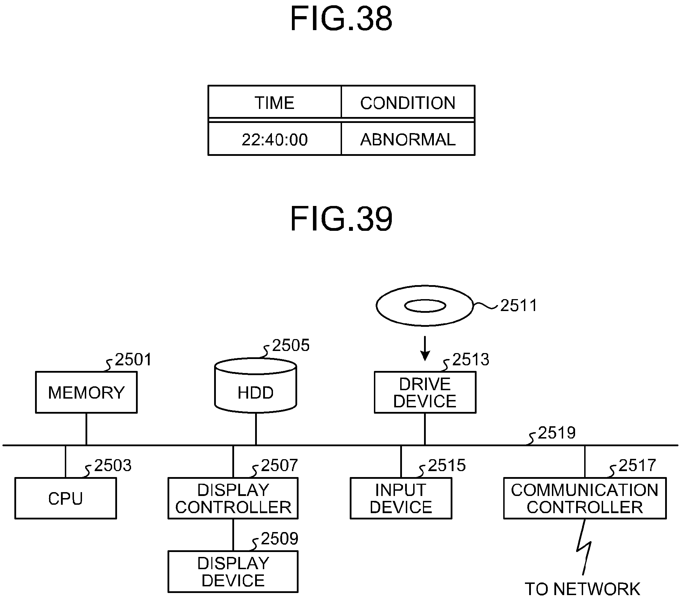

The first generator 101, the second generator 103, the sensing unit 105 and the output unit 107 are realized by a central processing unit (CPU) 2503 in FIG. 39 by executing a program that is loaded into a memory 2501 in FIG. 39. The time series data storage 111, the attractor storage 113, the barcode data storage 115, the Betti number data storage 117, the distance data storage 119 and the sensing data storage 121 are, for example, provided in the memory 2501 or a hard disk drive (HDD) 2505 in FIG. 39.

The first generator 101 executes a process based on multidimensional time series data that is stored in the time series data storage 111 and stores the result of the process in the attractor storage 113. The second generator 103 executes a process based on the data that is stored in the attractor storage 113 and stores the result of the process in the barcode data storage 115. The second generator 103 executes a process based on the data that is stored in the barcode data storage 115 and stores the result of the process in the Betti number data storage 117. The sensing unit 105 executes a process based on the data that is stored in the distance data storage 119 and stores the result of the process in the sensing data storage 121. The output unit 107 displays display data that is generated based on the data stored in the sensing data storage 121 on a display device (such as a monitor). The multidimensional time series data in the first embodiment refers to time series data on multiple items.

FIG. 7 is a diagram illustrating an exemplary graph of multidimensional time series data that is stored in the time series data storage 111. FIG. 7 represents a graph about the time and value with respect to each item of three-dimensional time series data, where xᵢ denotes the value of item x at time i, yᵢ denotes the value of item y at time i, and zᵢ denotes the value of item z at time i. The time series data is, for example, biological data (time series data of the heart rate, brain waves, pulses, body temperature, or the like), data that is measured by sensors (time series data of a gyro sensor, acceleration sensor, geomagnetic sensor, or the like), financial data (time series data of interest, commodity prices, balance of international payments, stock prices, or the like), natural environment data (time series data of temperature, humidity, carbon dioxide concentration or the like) or social data (data of labor statistics, population statistics, or the like).

In the first embodiment, the multidimensional time series data like that illustrated in FIG. 7 is dealt with and the state represented by the multidimensional time series data is classified. In the example in FIG. 7, the number of dimensions is 3. Alternatively, the number of dimensions may be 2 or 4.

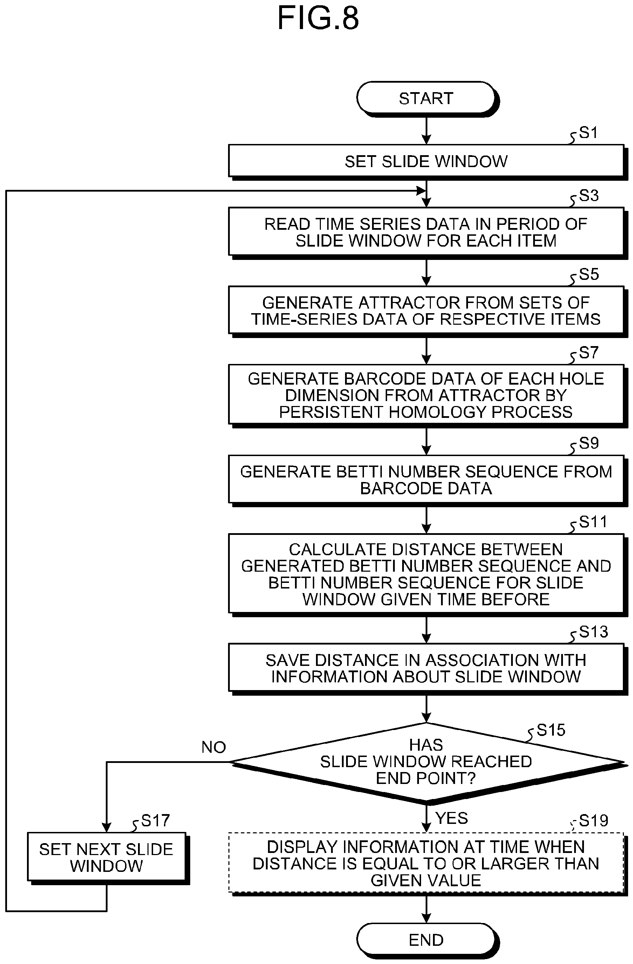

The processes that are executed by the information processing device 1 in the first embodiment will be described. FIG. 8 is a diagram illustrating a process flow of the processes that are executed by the information processing device 1 in the first embodiment.

The first generator 101 sets a slide window (FIG. 8: step S1). A slide window refers to a period during which multidimensional time series data to be processed is extracted. At step S1, a time at which an initial slide window starts and a length of period are set.

The first generator 101 reads the multidimensional time series data in the period of the slide window from the time series data storage 111 for each item (step S3).

The first generator 101 generates an attractor that is a set of (xᵢ, yᵢ and zᵢ) in the period of the slide window from the time series data on each item that is read at step S3 (step S5). The first generator 101 then stores the generated attractor in the attractor storage 113. A set of a finite number of points that is generated at step S5 is not an "attractor" strictly but a quasi-attractor; however, the set of points that is generated at step S5 is referred to as "attractor" herein. When the time series data on each item is acquired at discrete times, an attractor may be generated not from a set of all (xᵢ, yᵢ and zᵢ) in the period of the slide window but a set containing (xᵢ, yᵢ and zᵢ) at n intervals (n=1,2,3,...).

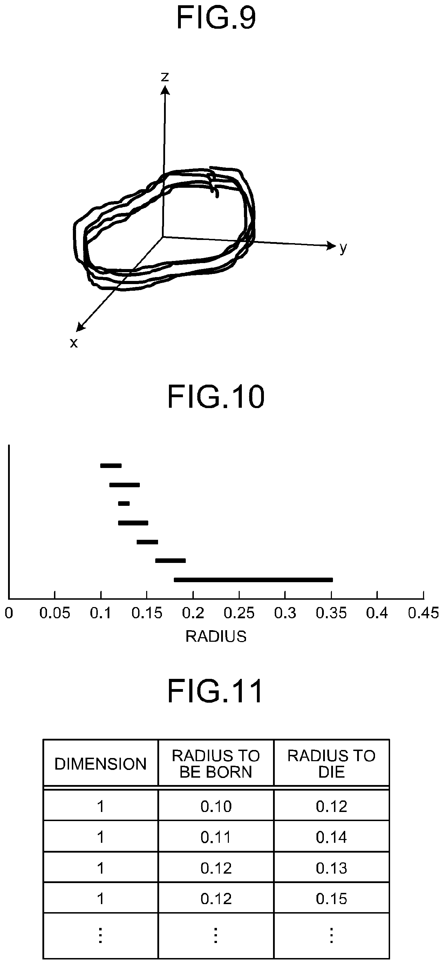

FIG. 9 is a diagram illustrating an exemplary attractor. In the example in FIG. 9, the attractor is represented in a three-dimensional space. An attractor reflects features of the original multidimensional time series data and an analogous relationship among attractors is equivalent to an analogous relationship among sets of original multidimensional time series data. When an attractor is analogous to another attractor, this means that the sets of features of the respective sets of original multidimensional time series data are analogous to each other. Attractors that are analogous to each other are generated from sets of multidimensional data that have the same features but are different from each other in phenomenon (appearance). From sets of multidimensional time series data each of which has different features but are analogous to each other in phenomenon, different attractors are generated.

Returning to the description of FIG. 8, the second generator 103 performs a persistent homology process on the attractor that is generated at step S5 to generate barcode data of each hole dimension (step S7). The second generator 103 stores the generated barcode data in the barcode data storage 115. The barcode data of each hole dimension is generated at step S7.

The "homology" refers to a method of expressing features of an object by the number of holes in m (m≥0) dimensions. A "hole" refers to an element in a homology group and a 0-dimensional hole is a cluster, a 1-dimensional hole is a hole (tunnel), and a 2-dimensional hole is a void. The number of holes of each dimension is referred to as a Betti number.

"Persistent homology" is a method for featuring transition of m-dimensional holes in an object (a set of points herein) and persistent homology makes it possible to find features related to arrangement of points. In this method, each point in an object is gradually expanded into a sphere and, in that process, a time at which each hole is born (expressed by a radius of a sphere at birth) and a time at which each hole dies (expressed by a radius of a sphere at death) are classified. Note that the "time" at which a hole is born, the "time" at which the hole dies are not relevant to "time" in the multidimensional time series data from which the attract to be processed by persistent homology is generated.

Using birth radii and death radii of holes, it is possible to generate a barcode chart like that illustrated in FIG. 10. In FIG. 10, a value along the horizontal axis represented a radius and each line segment corresponds to one hole. The radius that corresponds to the left end of a line segment is a birth radius of a hole and the radius that corresponds to the right end of the line segment is a death radius of the hole. A line segment is referred to as a persistent interval. Such a barcode chart represents that, when a radius is 0.18, for example, there are two holes.

FIG. 11 is a table illustrating exemplary data for generating a barcode chart (referred to as barcode data below). The exemplary data in FIG. 11 contains numeric values each representing a hole dimension, birth radii of the holes and death radii of the holes. In step S7, barcode data is generated for each hole dimension.

Execution of the above-described process enables equivalence between the analogous relationship between barcode data that is generated from an attractor and barcode data that is generated from another attractor and the analogous relationship between the attractors. Thus, when the attractors are the same, sets of barcode data to be generated are the same and, when the attractors are not the same, a difference appears between the sets of barcode data except when the difference between the attractors is slight.

For the details of persistent homology, refer to "Yasuaki Hiraoka, 'Protein Structure and Topology: Introduction to Persistent Homology', Kyoritsu Shuppan", for example.

Returning to the description of FIG. 8, the second generator 103 reads the barcode data that is generated at step S7 from the barcode data storage 115 and generates a Betti number sequence from the read barcode data (step S9). The second generator 103 then stores the generated Betti number sequence in the Betti number data storage 117.

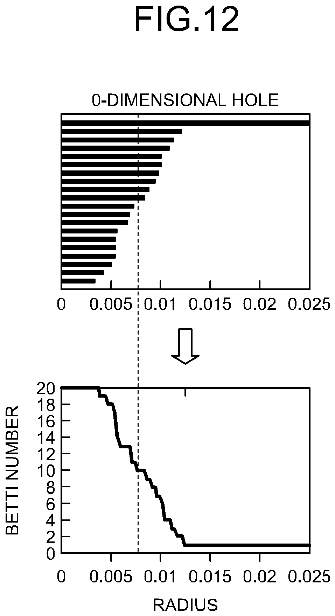

The Betti number sequence that is generated at step S9 is data representing the relationship between the radius of spheres in persistent homology (interval between the time at which a hole is born and the time at which the hole dies) and the Betti number. The relationship between barcode data and a generated Betti number sequence will be described using FIG. 12. FIG. 12 is a diagram for explaining a relationship between barcode data and a Betti number sequence for 0-dimensional holes. The upper graph in FIG. 12 is a graph that is generated from barcode data, where the values along the horizontal axis represent radii. The lower graph in FIG. 12 is a graph that is generated from a Betti number sequence, where the values along the vertical axis represent Betti numbers and the values along the horizontal axis represent radii. The Betti number represents the number of holes and thus, for example, as illustrated in FIG. 12, the number of holes that exist when the radius corresponds to the dashed line in the upper graph is 10 and accordingly, in the lower graph, the Betti number corresponding to the dashed line is also 10.

Basically, the same Betti number sequence is obtained from the same barcode data. In other words, when original attractors are the same, the same Betti number sequences are obtained; hoverer, a case where the same Betti number sequences are obtained from different barcodes occurs rarely.

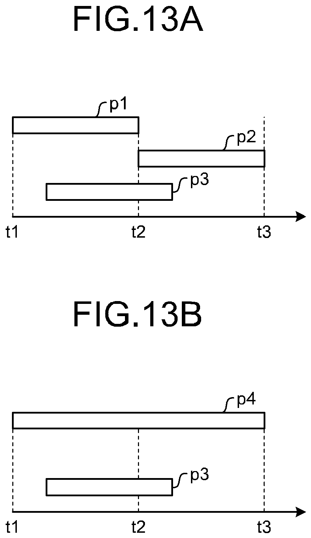

For example, assume barcode data like that illustrated in FIGS. 13A and 13B. In the case in FIG. 13A, persistent interval p1 starts at time t1 and ends at time t2, and persistent interval p2 starts at time t2 and ends at time t3. On the other hand, in the case in FIG. 13B, persistent interval p4 starts at time t1 and ends at time t3. In both cases, persistent intervals p3 are completely the same.

In such a case, completely the same Betti number sequences are obtained from the barcode data in both cases, and thus it is not possible to distinguish between both cases by the Betti number sequences; however, a possibility that such a phenomenon will occur is low.

Therefore, an analogous relationship relationship between a Betti number sequence that is generated from certain barcode data and a Betti number sequence that is generated from other barcode data is equivalent to an analogous relationship between sets of barcode data as long as the above-described rare case does not occur. Accordingly, even though the definition of distance between data changes, an analogous relationship between Betti number sequences that are generated from barcode data is mostly equivalent to the analogous relationship between sets of original multidimensional time series data.

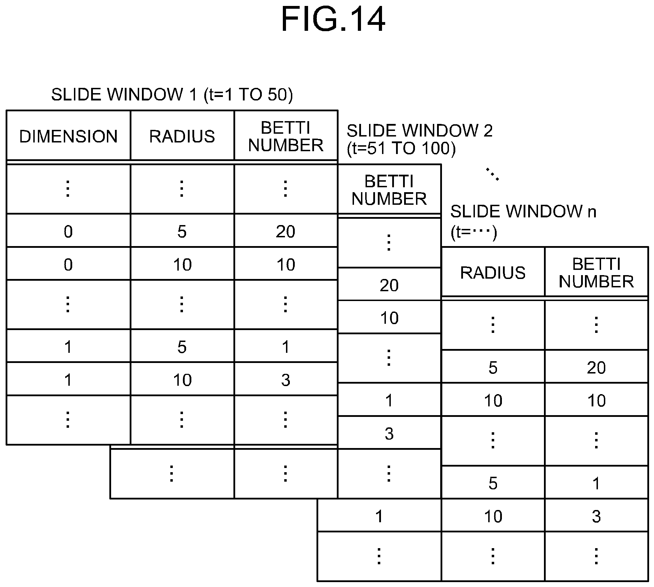

FIG. 14 is a diagram illustrating exemplary data that is stored in the Betti number data storage 117. In the example in FIG. 14, data containing dimensions, radii and Betti numbers is stored for each slide window and the Betti number sequences of each hole dimension are linked. Note that, at step S7, when barcode data of only a given hole dimension is generated, a Betti number sequence for the given hole dimension is stored for each slide window.

As described above, execution of the persistent homology process enables the Betti number sequence to reflect features of the original multidimensional time series data. A Betti number sequence is generated for each slide window and is stored in the Betti number data storage 117.

Calculation for persistent homology is a topological method and has been used for analysis of a structure of a static object that is represented by a set of points (for example, protein, a molecular crystal, a sensor network or the like). On the other hand, in the first embodiment, a set of points (that is, an attractor) that expresses features of data that continuously change over time is a target of calculation. In the first embodiment, analyzing the structure of a set of points itself is not a purpose and thus the target and purpose are completely different from those of typical calculation of persistent homology.

Returning to the description of FIG. 8, the second generator 103 reads the Betti number sequence that is generated at step S9 from the Betti number data storage 117. The second generator 103 then calculates a distance between the read Betti number sequence and a reference Betti number sequence (a Betti number sequence that is generated for a slide window a given time before) (step S11). The slide window the given time before is a slide window where a time the given time before the time at which the slide window for which the Betti number sequence is generated at step S9 starts (for example, a slide window one slide window before). When there is no Betti number sequence for the slide window the given time before (for example, when the process at step S11 is executed for the first time), the distance from a Betti number sequence that is generated in advance is calculated or step S11 is omitted. The distance is, for example, an Euclidean distance (or norm) and a cosine analogy, or the like.

The second generator 103 saves the distance that is calculated at step S11 in association with the information about the slide window for which the Betti number sequence is generated at step S9 (step S13).

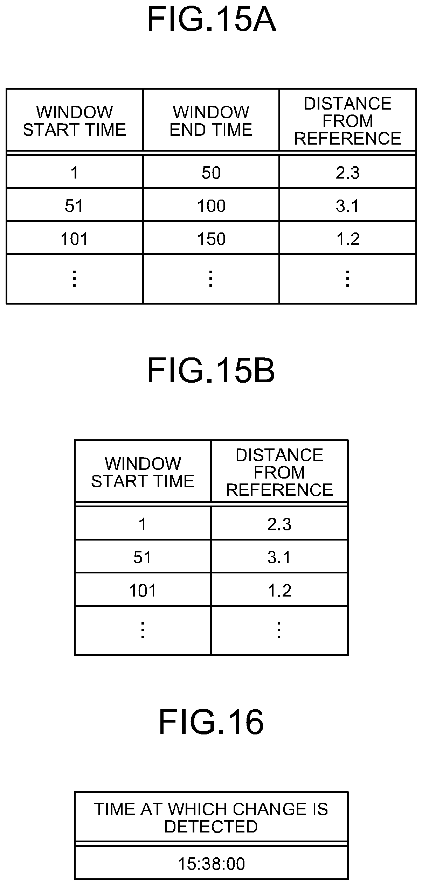

FIGS. 15A and 15B are diagrams illustrating exemplary data that is stored in the distance data storage 119. In the example in FIG. 15A, times at each of which a slide window starts, times at each of which the slide window ends and distances each from a reference Betti number sequence are stored. In the example in FIG. 15B, times at each of which a slide window starts and distances each from a reference Betti number sequence are stored.

The second generator 103 determines whether the slide window has reached the end point (i.e., whether the time at which the period of the slide window that is set at step S1 or step S17 ends has reached the time at which the multidimensional time series data ends) (step S15).

When the slide window has not reached the end point (step S15: No route), the second generator 103 sets the next slide window (step S17). For example, the next slide window is set such that the time a given time after the time at which the slide window, which is set at step S1 or the previous step S17, starts is the time at which the period of the next slide window starts. Note that a setting may be made such that the sequential slide windows have overlapping periods. The process then returns to step S3.

On the other hand, when the slide window has reaches the end point (step S15: YES route), the sensing unit 105 stores information of a time of the slide window for which the distance that is calculated at step S11 is equal to or larger than a given value (for example, a start time, an intermediate time or an end time) in the sensing data storage 121. The output unit 107 then generates display data based on the information of the time that is stored in the sensing data storage 121 and displays the generated display data on the display device (step S19). Then, the process ends. Whether to execute the process at S19 is a choice and thus the block of step S19 is indicated by a dashed line in FIG. 8.

FIG. 16 is a diagram illustrating exemplary data that is stored in the sensing data storage 121 in the first embodiment. In the first embodiment, as a change can be sensed according to a distance, the information of time that is stored in the sensing data storage 121 represents the time at which a change is sensed.

The sensing of change in the first embodiment does not limit multidimensional time series data to which the sensing is applicable, not as in the related technology that is represented in the column of background art (for example, the invariant analysis or the subspace method), and the sensing of the first embodiment is applicable to more types of multidimensional time series data. In other words, it is possible to appropriately sense a change in multidimensional time series data with a possibility that false sensing may occur when the related technology is used and thus improve accuracy of sensing a change.

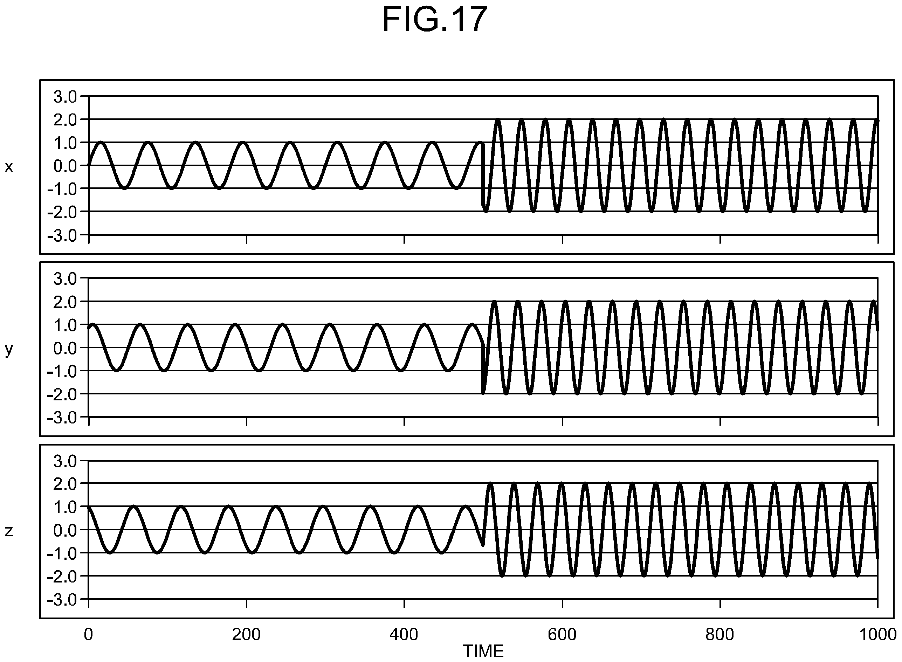

This aspect will be described below using specific examples. The multidimensional time series data illustrated in FIG. 17 will be exemplified. In FIG. 17, the values along the horizontal axis represent times and values along the vertical axis represent values of time series data. In the example in FIG. 17, time series data of item x, time series data of item y and time series data of item z are represented and the time series data of any of the items is sine-wave data but each set of time series data has a given phase shift. At time 500, a change is made to change the amplitude from 1 to 2 and increase the frequency.

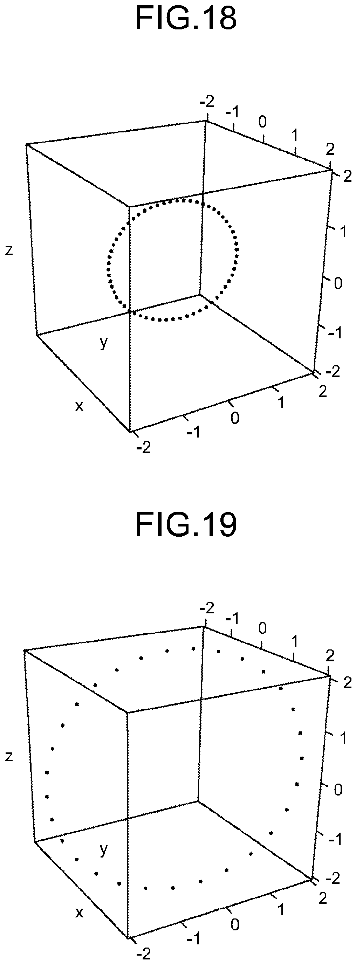

FIG. 18 is a diagram illustrating an exemplary attractor that is generated from data in a period before the change among the multidimensional time series data illustrated in FIG. 17. In the example in FIG. 18, points each at coordinates that are values at each time are represented in a three-dimensional space.

FIG. 19 is a diagram illustrating an exemplary attractor that is generated from data in a period after the change among the multidimensional time series data illustrated in FIG. 17. As in FIG. 18, points each at coordinates that are values at each time are represented in a three-dimensional space.

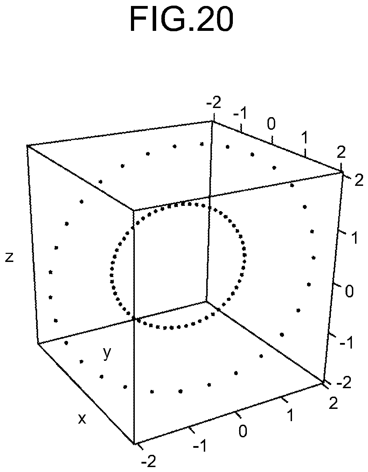

FIG. 20 is a diagram in which the attractor that is generated from the data in the period before the change and the attractor that is generated from the data in the period after the change are superimposed. As is obvious from FIG. 20, before and after the change, the shape of the attractor is the same but the size of the attractor changes. Furthermore, the change in frequency leads to a sparse distribution of points.

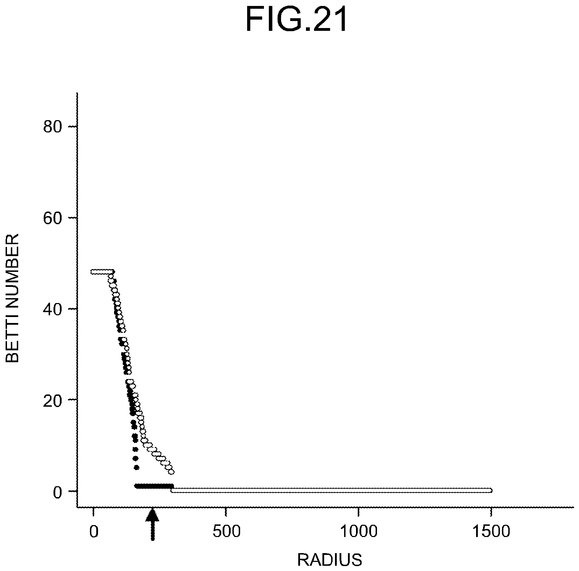

FIG. 21 is a diagram illustrating a Betti number sequence that is generated from the attractor of the period before the change and a Betti number sequence that is generated from the attractor of the period after the change. In FIG. 21, the hatched plot represents the Betti number sequence that is generated from the attractor of the period before the change and the unhatched plot represents the Betti number sequence that is generated from the attractor of the period after change. As FIG. 21 represents, the change of the attractor in size changes the shape of the Betti number sequence.

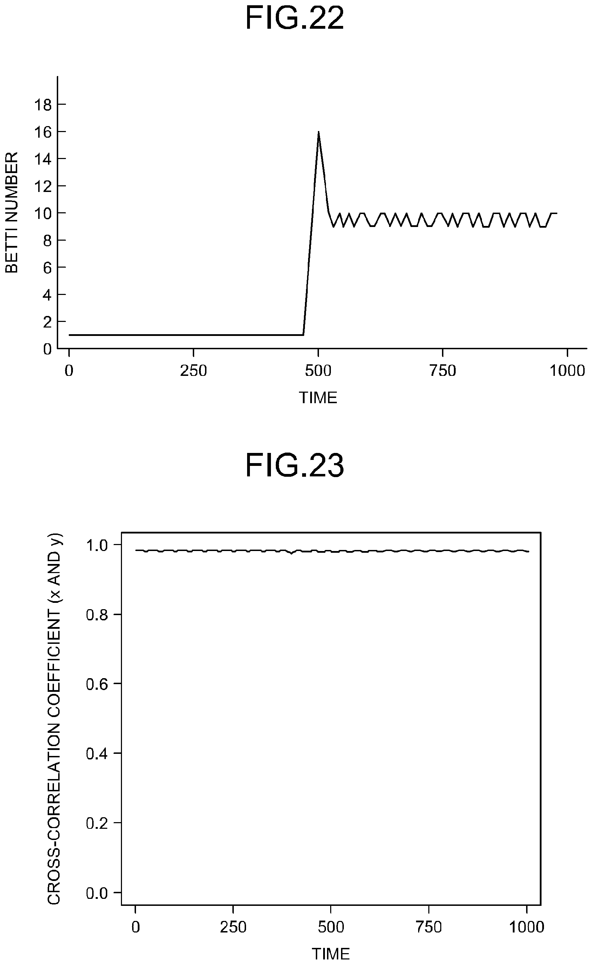

FIG. 22 is a diagram illustrating the Betti number at the radius indicated by the arrow in FIG. 21. At time 500, the Betti number changes from 1 to 16. As described above, at a time when a change occurs in multidimensional time series data, an obvious change appears also in Betti number.

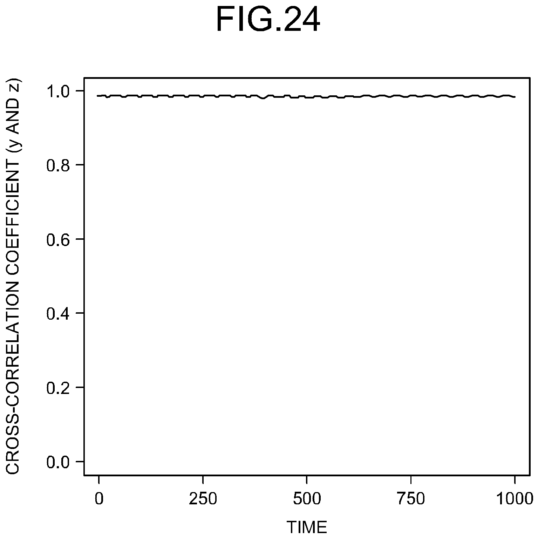

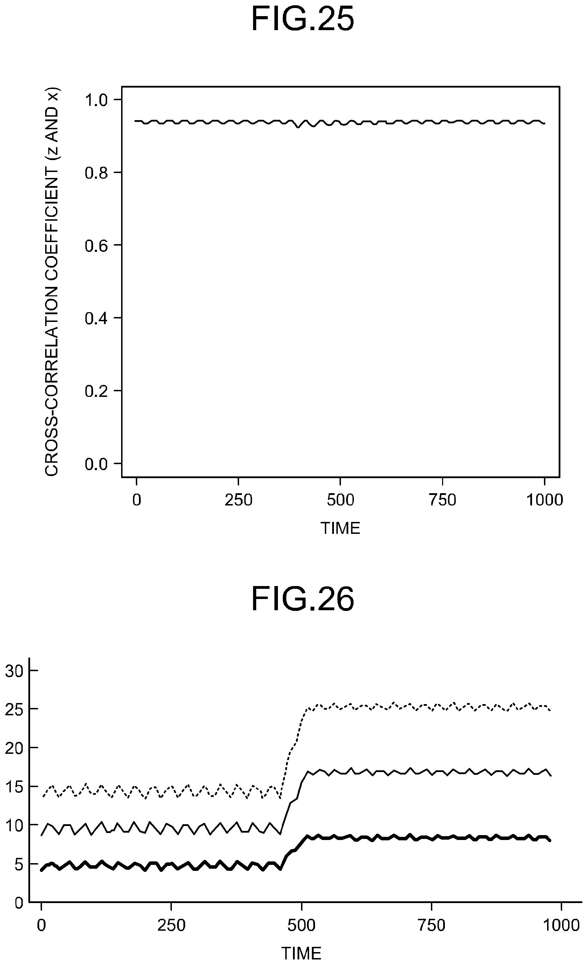

FIGS. 23 to 25 represent the result of executing an invariant analysis on the multidimensional time series data represented in FIG. 17. In FIG. 23, the values along the horizontal axis represent times and the values along the vertical axis represent cross-correlation coefficients between item x and item y. In FIG. 24, the values along the horizontal axis represent times and the values along the vertical axis represent cross-correlation coefficients each between item y and item z. In FIG. 25, the values along the horizontal axis represent times and the values along the vertical axis represent cross-correlation coefficients between item z and item z. As illustrated in FIGS. 23 to 25, the cross-correlation coefficient transitions at approximately 1 in any of the combinations and thus it is not possible to sense a change at time 500.

FIG. 26 is a diagram illustrating a result of executing the subspace method on the multidimensional time series data illustrated in FIG. 7. In FIG. 26, the values along the horizontal axis represent times, and the values along the vertical axis represent amounts corresponding to the position and size of each subspace. Specifically, the values represent distances each from a reference point of condition point in each subspace. As the reference point, for example, the center of distribution is usable. In FIG. 26, the bold solid line represents the value of item x, the narrow solid line represents the value of item y and the dashed line represents the value of item z. A bias is applied to make it possible to easily check a change in the value of each of the items. As illustrated in FIG. 26, the values along the vertical axis after the change have values larger than those before the change. This is because an increase in frequency increases the interval between points on the attractor and thus, when a sub time series is created using the same number of condition points, the subspace is increased. As described above, the values change at around time 500 and accordingly it is possible to sense a change in condition.

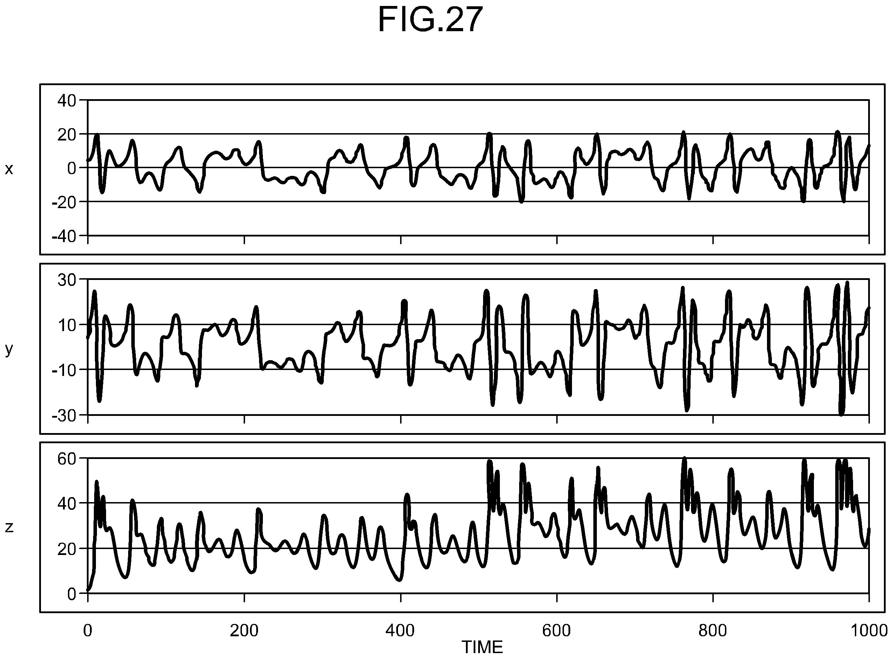

Using another specific example, a difference between a result of using the method of the first embodiment and a result of using the related technology will be described. The multidimensional time series data illustrated in FIG. 27 will be exemplified. In FIG. 27, the values along the horizontal axis represent times and the values along the vertical axis represent values of time series data. In the example in FIG. 27, time series data of item x, time series data of item y and time series data of item z are represented and x, y and z correspond to three variables contained in a governing equation of a chaotic time series. At time 500, the value of a control parameter of the governing equation is changed. Note that the condition of double scroll chaos is mostly saved at around the change.

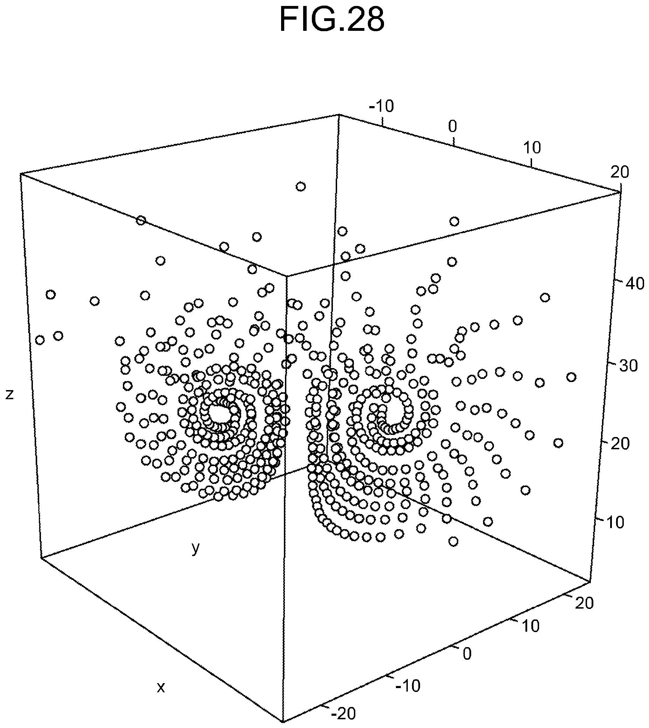

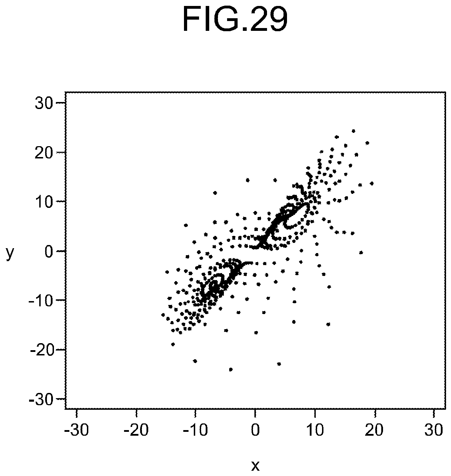

FIGS. 28 and 29 are diagrams illustrating an exemplary attractor that is generated from the data in a period before a change among the multidimensional time series data illustrated in FIG. 27. In the example in FIG. 28, points each at coordinates that are values at each time are represented in a three-dimensional space. In the example in FIG. 29, points each at coordinates that are values at each time are represented in an x-y plane.

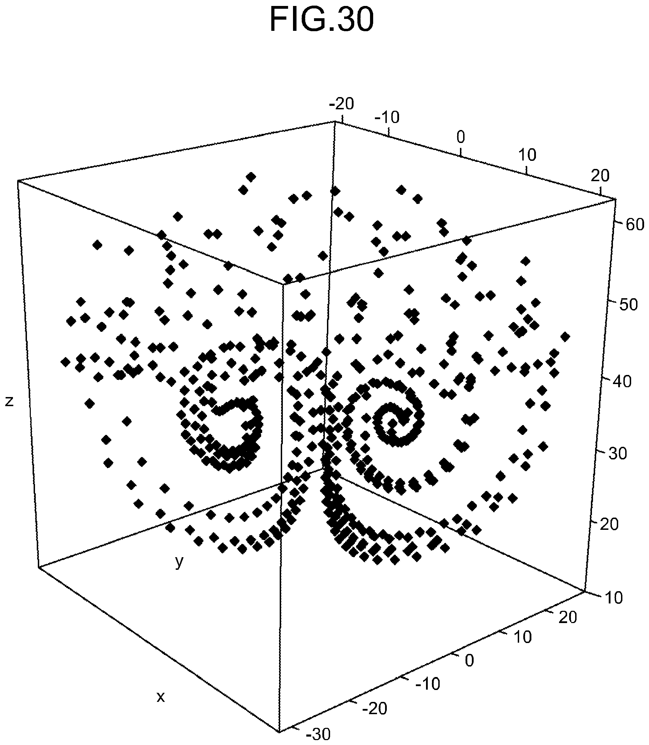

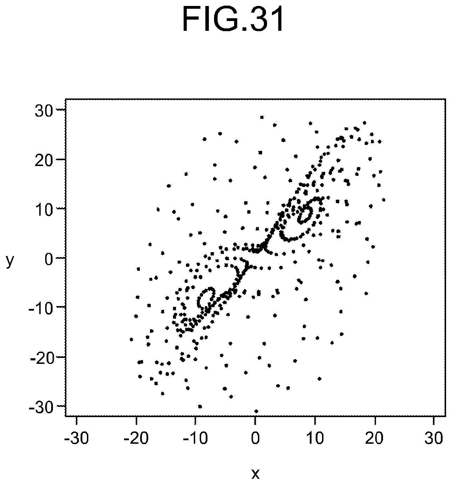

FIGS. 30 and 31 are diagrams illustrating an exemplary attractor that is generated from the data in a period after the change among the multidimensional time series data illustrated in FIG. 27. In the example illustrated in FIG. 30, points each at coordinates that are values at each time are represented in a three-dimensional space. In the example in FIG. 31, points each at coordinates that are values at each time are represented in an x-y plane.

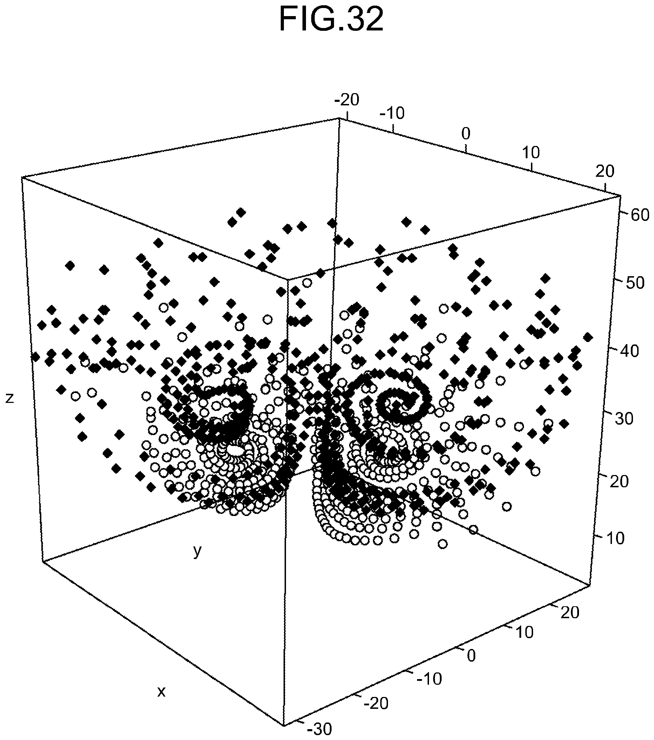

FIG. 32 is a diagram in which the attractor that is generated from the data in the period before the change and the attractor that is generated from the data in the period after the change are superimposed. As is obvious from FIG. 32, the double scroll shape is common before and after the change but the shape is different in detail before and after the change.

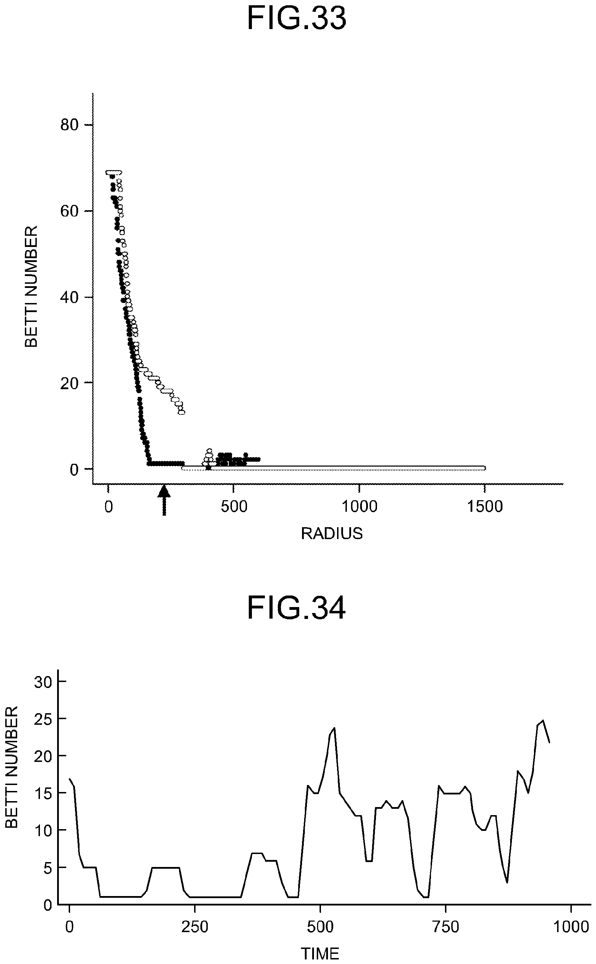

FIG. 33 a diagram illustrating a Betti number sequence that is generated from the attractor of the period before the change and a Betti number sequence that is generated from the attractor of the period after change. In FIG. 33, the hatched plot represents the Betti number sequence that is generated from the attractor of the period before the change and the unhatched plot represents the Betti number sequence that is generated from the attractor of the period after change. As FIG. 33 represents, the change of the attractor in shape changes the shape of the Betti number sequence.

FIG. 34 is a diagram illustrating the Betti number at the radius indicated by the arrow in FIG. 33. The change of the Betti number at time 500 is large and the value of Betti number and mode of transition before the change in value of the control parameter and those after the change are different from each other. As described above, at a time when a change occurs in multidimensional time series data, an obvious change appears in Betti number.

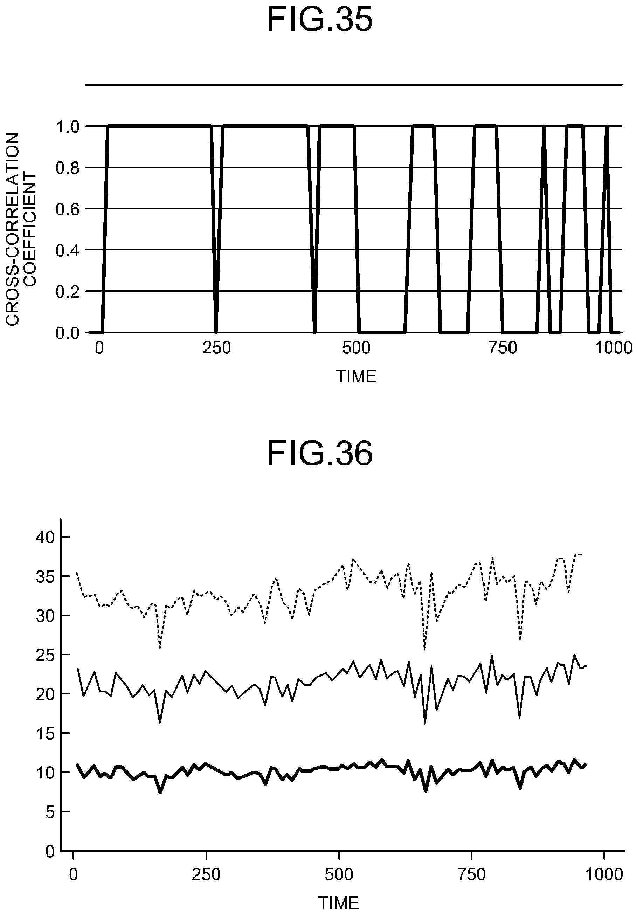

FIG. 35 represents the result of executing an invariant analysis on the multidimensional time series data represented in FIG. 27. In FIG. 35, the values along the horizontal axis represent times and the values along the vertical axis represent cross-correlation coefficients each between any one of combinations of variables. As illustrated in FIG. 35, after the control parameter is changed, the period during which the value of cross-correlation coefficient is 0 is longer than that before the change of the control parameter. Accordingly, it is possible to sense a change in condition from a difference between the values of the cross-correlation coefficient before and after the change of the control parameter.

FIG. 36 is a diagram illustrating a result of executing the subspace method on the multidimensional time series data illustrated in FIG. 27. In FIG. 36, the values along the horizontal axis represent times. The values along the vertical axis represent amounts corresponding to the position and size of each subspace. Specifically, the vales represent distances each from a reference point of condition point in each subspace. As the reference point, for example, the center of distribution is usable. In FIG. 36, the bold solid line represents the value of item x, the narrow solid line represents the value of item y and the dashed line represents the value of item z. A bias is applied to make it possible to easily check a change in the value of each of the items. As illustrated in FIG. 36, the change in value at around the change is small and time series data is non-liner data in the first place, and thus it is difficult to extract a stable orthogonal basis. The method is sensitive to change of subspaces and thus there seems to be a change in detail locally; however, it is difficult to sense the change clearly. Thus, the subspace method is not suitable to the multidimensional time series data illustrated in FIG. 27.

The sensing of change in the first embodiment does not limit multidimensional time series data to which the sensing is applicable, not as in the related technology that is represented in the column of background art, and the sensing of the first embodiment is applicable to more types of multidimensional time series data.

### [b] Second Embodiment

Sensing of change is executed as a mode of classifying a state in the first embodiment. In a second embodiment, sensing of abnormality is executed as another mode of classifying a state.

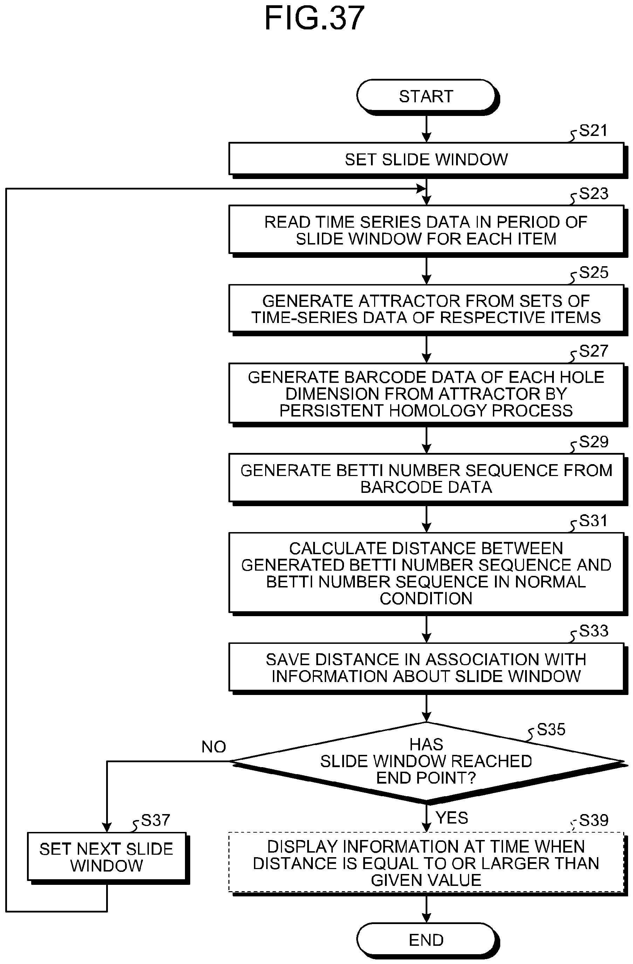

Processes that are executed by the information processing device 1 according to the second embodiment will be described. FIG. 37 is a diagram illustrating a process flow of the processes that are executed by the information processing device 1 in the second embodiment.

The first generator 101 sets a slide window (FIG. 37: step S21). A slide window refers to a period during which multidimensional time series data to be processed is extracted. At step S21, a time at which and initial slide window and a length of period are set.

The first generator 101 reads the multidimensional time series data in the period of the slide window from the time series data storage 111 for each item (step S23).

The first generator 101 generates an attractor that is a set of (xᵢ, yᵢ and zᵢ) in the period of the slide window from the time series data on each item that is read at step S23 (step S25). The first generator 101 then stores the generated attractor in the attractor storage 113.

The second generator 103 performs a persistent homology process on the attractor that is generated at step S25 to generate barcode data of each hole dimension (step S27). The second generator 103 stores the generated barcode data in the barcode data storage 115. The barcode data of each hole dimension is generated at step S27.

The second generator 103 reads the barcode data that is generated at step S27 from the barcode data storage 115 and generates a Betti number sequence from the read barcode data (step S29). The second generator 103 then stores the generated Betti number sequence in the Betti number data storage 117.

The second generator 103 reads the Betti number sequence that is generated at step S29 from the Betti number data storage 117. The second generator 103 then calculates a distance between the read Betti number sequence and a reference Betti number sequence (a Betti number sequence that is generated for a slide window in a normal condition) (step S31). The Betti number sequence for the slide window in the normal condition is generated in advance. The distance is, for example, a Euclidean distance (or norm) and a cosine analogy, or the like.

The second generator 103 saves the distance that is calculated at step S31 in association with the information about the slide window for which the Betti number sequence is generated at step S29 (step S33).

The second generator 103 determines whether the slide window has reached the end point (i.e., whether the time at which the period of slide window that is set at step S21 or step S37 ends has reached the time at which the multidimensional time series data ends) (step S35).

When the slide window has not reached the end point (step S35: No route), the second generator 103 sets the next slide window (step S37). For example, the next slide window is set such that the time a given time after the time at which the slide window, which is set at step S21 or the previous step S37, starts is the time at which the period of the next slide window starts. Note that a setting may be made such that the sequential slide windows have overlapping periods. The process then returns to step S23.

On the other hand, when the slide window has reached the end point (step S35: YES route), the sensing unit 105 stores information of a time of the slide window for which the distance that is calculated t step S31 is equal to or larger than a given value (for example, a start time, an intermediate time or an end time) in the sensing data storage 121. The output unit 107 then generates display data based on the information of the time that is stored in the sensing data storage 121 and displays the generated display data on the display device (step S39). Then, the process ends. Whether to execute the process at S39 is a choice and thus the block of step S39 is indicated by a dashed line in FIG. 37.

FIG. 38 is a diagram illustrating exemplary data that is stored in the sensing data storage 121 in the second embodiment. In the second embodiment, as a difference from the reference condition can be sensed according to a distance, the information of time that is stored in the sensing data storage 121 represents the time at which the difference from the reference condition is sensed. In the example in FIG. 38, as the difference from the normal condition that serves as the reference condition is sensed, information indicating that an abnormal condition occurred is stored.

The sensing of change in the second embodiment does not limit multidimensional time series data to which the sensing is applicable, not as in the related technology that is represented in the column of background art (for example, the invariant analysis or the subspace method), and the sensing of the first embodiment is applicable to more types of multidimensional time series data. In other words, it is possible to appropriately sense a change in multidimensional time series data with a possibility that false sensing may occur when the related technology is used and thus improve accuracy of sensing a change.

The embodiments of the invention have been described above; however the present invention is not limited thereto. For example, the functional block configuration of the information processing device 1 described above may mismatch an actual program module configuration.

The configuration of each table described above is an example only and the above-described configuration need not necessarily be used. In the process flow, the turns of the processes may be switched as long as the process result does not change. Furthermore, the processes may be executed in parallel.

Furthermore, multiple information processing devices may be caused to execute the processes of the embodiments to increase the speed of the processes.

The above-described information processing device 1 is computer device. As illustrated in FIG. 39, the memory 2501, the CPU 2503, the HDD 2505, a display controller 2507 connected to a display device 2509, a drive device 2513 for a removable disk 2511, an input unit 2515, and a communication controller 2517 for connection with a network are connected via a bus 2519. An operating system (OS) and an application program for carrying out the processes in the embodiments are stored in the HDD 2505, and, when executed by the CPU 2503, the OS and the application program are read from the HDD 2505 into the memory 2501. The CPU 2503 controls the display controller 2507, the communication controller 2517, and the drive device 2513 according to the content of the processes of the application program and causes them to perform predetermined operations. Moreover, data being processed is stored in the memory 2501 mainly. Alternatively, the data may be stored in the HDD 2505. In the embodiments of the invention, the application program to perform the above-described processes is stored in the computer-readable removable disk 2511 and distributed and is installed into the HDD 2505 from the drive device 2513. The application program may be installed into the HDD 2505 via a network, such as the Internet, and the communication controller 2517. In the above-described computer device, the hardware, such as the CPU 2503 and the memory 2501, the OS and the program, such as the application program, organically cooperate with each other, so that various functions described above are realized.

The above-described embodiments are summarized as follows.

A state classifying method according to the first embodiment includes: (A) generating an attractor containing multiple points each at coordinates that are values of multiple sets of time series data; (B) generating Betti number sequence data by applying a persistent homology process on the attractor; and (C) classifying a state that is represented by the multiple sets of time series data based on the Betti number sequence data.

The Betti number sequence data that is generated according to the above-described method reflects the features of original multiple sets of time series data and thus accuracy of classifying a state can be improved.

The persistent homology process may be a process of counting a Betti number in a case the radii of spheres each centering each point contained in the attractor are increased over time.

Increasing the radii of the spheres changes the number of holes, and the change of the number of holes differs depending on the distribution of the points contained in the attractor. Accordingly, counting the Betti number in the above-described manner enables the Betti number sequence data to properly reflect the features of the attractor.

The classifying the state represented by the multiple sets of time series data may include (c1) sensing a change in the state represented by the multiple sets of time series data based on comparison between the generated Betti number sequence data and Betti number sequence data that is generated for multiple sets of time series data a given time before.

Accordingly, sensing a change can be executed appropriately.

A program for causing a computer to execute the processes according to the above-described method is created, and the program is stored in a computer readable storage medium or storage device, such as a flexible disk, a CD-ROM, a magneto-optic disk, a semiconductor memory, or a hard disk. In addition, the intermediate process result is temporarily stored in a storage device, such as a main memory.

According to an aspect, it is possible to improve accuracy of classifying a state based on multidimensional time series data.

## Claims

1. A computer program comprising instructions which, when the program is executed by a computer, cause the a computer (1) to execute a process for sensing a change in a state of an object or an environment represented by multidimensional time series data measured by a sensor based on an attractor generated therefrom, comprising:
reading, from a storage, multidimensional time series data that includes values of sets of time series data at each of times included in a first period;
generating an attractor containing a plurality of points, each of the plurality of points representing values of the sets of time series data at a time included in the first period;
generating, by performing a persistent homology process on the attractor, barcode data of each hole dimension, wherein a hole indicates an element in a homology group and the barcode data indicates a birth radius and a death radius of a hole for each hole dimension;
generating Betti number sequence data from the barcode data, wherein the Betti number sequence data represents a relationship between an interval between the birth radius and the death radius, and a Betti number representing a number of holes for each hole dimension;
**characterized by**
calculating a distance between the generated Betti number sequence data and another Betti number sequence data that is generated for a second period that is a predetermined time before the first period; and
outputting, when the distance is equal to or larger than a predetermined value, information indicating that a change in a state that is represented by the multidimensional time series data has occurred during the first period.

2. The program according to claim 1, wherein the persistent homology process is a process of counting a Betti number in a case where radii of spheres each centering each point contained in the attractor are increased over time.

3. A method performed by a computer (1), for sensing a change in a state of an object or an environment represented by multidimensional time series data measured by a sensor based on an attractor generated therefrom, the method comprising:
reading, from a storage, multidimensional time series data that includes values of sets of time series data at each of times included in a first period;
generating an attractor containing a plurality of points, each of the plurality of points representing values of the sets of time series data at a time included in the first period;
generating, by performing a persistent homology process on the attractor, barcode data of each hole dimension, wherein a hole indicates an element in a homology group and the barcode data indicates a birth radius and a death radius of a hole for each hole dimension;
generating Betti number sequence data from the barcode data, wherein the Betti number sequence data represents a relationship between an interval between the birth radius and the death radius, and a Betti number representing a number of holes for each hole dimension;
**characterized by**
calculating a distance between the generated Betti number sequence data and another Betti number sequence data that is generated for a second period that is a predetermined time before the first period; and
outputting, when the distance is equal to or larger than a predetermined value, information indicating that a change in a state that is represented by the multidimensional time series data has occurred during the first period.

4. A device (1), for sensing a change in a state of an object or an environment represented by multidimensional time series data measured by a sensor based on an attractor generated therefrom, comprising:
a first generator (101) configured to read, from a storage, multidimensional time series data that includes values of sets of time series data at each of times included in a first period, generate an attractor containing a plurality of points, each of the plurality of points representing values of the sets of time series data at a time included in the first period, and generate, by performing a persistent homology process on the attractor, barcode data of each hole dimension, wherein a hole indicates an element in a homology group and the barcode data indicates a birth radius and a death radius of a hole for each hole dimension;
**characterized by**
a second generator (103) configured to generate Betti number sequence data from the barcode data, wherein the Betti number sequence data represents a relationship between an interval between the birth radius and the death radius, and a Betti number representing a number of holes for each hole dimension, and calculate a distance between the generated Betti number sequence data and another Betti number sequence data that is generated for a second period that is a predetermined time before the first period; and
an output unit (107) configured to output, when the distance is equal to or larger than a predetermined value, information indicating that a change in a state that is represented by the multidimensional time series data has occurred during the first period.

## Patentansprüche

1. Computerprogramm, das Anweisungen umfasst, die, wenn das Programm von einem Computer ausgeführt wird, den Computer (1) veranlassen, einen Prozess zum Erfassen einer Änderung eines Zustands eines Objekts oder einer Umgebung, der durch von einem Sensor gemessene mehrdimensionale Zeitreihendaten dargestellt wird, auf der Grundlage eines daraus erzeugten Attraktors auszuführen, umfassend:
Lesen, aus einem Speicher, von mehrdimensionalen Zeitreihendaten, die Werte von Sätzen von Zeitreihendaten zu jedem der in einer ersten Periode enthaltenen Zeitpunkte einschließen;
Erzeugen eines Attraktors, der eine Vielzahl von Punkten enthält, wobei jeder der Vielzahl von Punkten Werte der Sätze von Zeitreihendaten zu einem in der ersten Periode eingeschlossenen Zeitpunkt darstellt;
Erzeugen, durch Durchführen eines persistenten Homologieprozesses auf dem Attraktor, von Strichcodedaten jeder Lochdimension, wobei ein Loch ein Element in einer Homologiegruppe anzeigt und die Strichcodedaten einen Geburtsradius und einen Todesradius eines Lochs für jede Lochdimension anzeigen;
Erzeugen von Betti-Zahlensequenzdaten aus den Strichcodedaten, wobei die Betti-Zahlensequenzdaten eine Beziehung zwischen einem Intervall zwischen dem Geburtsradius und dem Todesradius und einer Betti-Zahl darstellen, die eine Anzahl von Löchern für jede Lochdimension darstellt;
**gekennzeichnet durch**
Berechnen eines Abstands zwischen den erzeugten Betti-Zahlensequenzdaten und anderen Betti-Zahlensequenzdaten, die für eine zweite Periode erzeugt werden, die eine vorbestimmte Zeit vor der ersten Periode liegt; und
Ausgeben, wenn der Abstand gleich oder größer als ein vorbestimmter Wert ist, von Informationen, die anzeigen, dass eine Änderung in einem Zustand, der durch die mehrdimensionalen Zeitreihendaten dargestellt wird, während der ersten Periode aufgetreten ist.

2. Programm nach Anspruch 1, wobei der persistente Homologieprozess ein Prozess des Zählens einer Betti-Zahl in einem Fall ist, in dem Radien von Kugeln, die jeweils jeden im Attraktor enthaltenen Punkt zentrieren, mit der Zeit vergrößert werden.

3. Verfahren, das von einem Computer (1) durchgeführt wird, um eine Änderung eines Zustands eines Objekts oder einer Umgebung zu erfassen, der durch mehrdimensionale Zeitreihendaten dargestellt wird, die von einem Sensor auf der Grundlage eines daraus erzeugten Attraktors gemessen werden, wobei das Verfahren Folgendes umfasst:
Lesen, aus einem Speicher, von mehrdimensionalen Zeitreihendaten, die Werte von Sätzen von Zeitreihendaten zu jedem der in einer ersten Periode enthaltenen Zeitpunkte einschließen;
Erzeugen eines Attraktors, der eine Vielzahl von Punkten enthält, wobei jeder der Vielzahl von Punkten Werte der Sätze von Zeitreihendaten zu einem in der ersten Periode eingeschlossenen Zeitpunkt darstellt;
Erzeugen, durch Durchführen eines persistenten Homologieprozesses auf dem Attraktor, von Strichcodedaten jeder Lochdimension, wobei ein Loch ein Element in einer Homologiegruppe anzeigt und die Strichcodedaten einen Geburtsradius und einen Todesradius eines Lochs für jede Lochdimension anzeigen;
Erzeugen von Betti-Zahlensequenzdaten aus den Strichcodedaten, wobei die Betti-Zahlensequenzdaten eine Beziehung zwischen einem Intervall zwischen dem Geburtsradius und dem Todesradius und einer Betti-Zahl darstellen, die eine Anzahl von Löchern für jede Lochdimension darstellt;
**gekennzeichnet durch**
Berechnen eines Abstands zwischen den erzeugten Betti-Zahlensequenzdaten und anderen Betti-Zahlensequenzdaten, die für eine zweite Periode erzeugt werden, die eine vorbestimmte Zeit vor der ersten Periode liegt; und
Ausgeben, wenn der Abstand gleich oder größer als ein vorbestimmter Wert ist, von Informationen, die anzeigen, dass eine Änderung in einem Zustand, der durch die mehrdimensionalen Zeitreihendaten dargestellt wird, während der ersten Periode aufgetreten ist.

4. Vorrichtung (1) zum Erfassen einer Änderung eines Zustands eines Objekts oder einer Umgebung, der durch von einem Sensor gemessene mehrdimensionale Zeitreihendaten dargestellt wird, auf der Grundlage eines daraus erzeugten Attraktors, umfassend:
einen ersten Generator (101), der konfiguriert ist, um aus einem Speicher mehrdimensionale Zeitreihendaten zu lesen, die Werte von Sätzen von Zeitreihendaten zu jedem in einer ersten Periode eingeschlossenen Zeitpunkt einschließen, einen Attraktor zu erzeugen, der eine Vielzahl von Punkten enthält, wobei jeder der Vielzahl von Punkten Werte der Sätze von Zeitreihendaten zu einem in der ersten Periode eingeschlossenen Zeitpunkt darstellt, und durch Durchführen eines persistenten Homologieprozesses auf dem Attraktor Strichcodedaten jeder Lochdimension zu erzeugen, wobei ein Loch ein Element in einer Homologiegruppe anzeigt und die Strichcodedaten einen Geburtsradius und einen Todesradius eines Lochs für jede Lochdimension anzeigen;
**gekennzeichnet durch**
einen zweiten Generator (103), der konfiguriert ist, um Betti-Zahlensequenzdaten aus den Strichcodedaten zu erzeugen, wobei die Betti-Zahlensequenzdaten eine Beziehung zwischen einem Intervall zwischen dem Geburtsradius und dem Todesradius und einer Betti-Zahl darstellen, die eine Anzahl von Löchern für jede Lochdimension darstellt, und einen Abstand zwischen den erzeugten Betti-Zahlensequenzdaten und anderen Betti-Zahlensequenzdaten zu berechnen, die für eine zweite Periode erzeugt werden, die eine vorbestimmte Zeit vor der ersten Periode liegt; und
eine Ausgabeeinheit (107), die konfiguriert ist, um, wenn der Abstand gleich oder größer als ein vorbestimmter Wert ist, Informationen auszugeben, die anzeigen, dass eine Änderung in einem Zustand, der durch die mehrdimensionalen Zeitreihendaten dargestellt wird, während der ersten Periode aufgetreten ist.

## Revendications

1. Programme informatique comprenant des instructions qui, lorsque le programme est exécuté par un ordinateur, amènent l'ordinateur (1) à exécuter un processus pour détecter un changement d'un état d'un objet ou d'un environnement représenté par des données de séries temporelles multidimensionnelles mesurées par un capteur sur la base d'un attracteur généré à partir de celles-ci, comprenant :
une lecture, à partir d'un espace de stockage, de données de séries temporelles multidimensionnelles qui incluent des valeurs d'ensembles de données de séries temporelles à chacun des instants inclus dans une première période ;
une génération d'un attracteur contenant une pluralité de points, chacun de la pluralité de points représentant des valeurs des ensembles de données de séries temporelles à un instant inclus dans la première période ;
une génération, en mettant en oeuvre un processus d'homologie persistante sur l'attracteur, de données de codes-barres de chaque dimension de trou, dans lequel un trou indique un élément dans un groupe d'homologie et les données de codes-barres indiquent un rayon de naissance et un rayon de mort d'un trou pour chaque dimension de trou ;
une génération de données de séquences de nombres de Betti à partir des données de codes-barres, dans laquelle les données de séquences de nombres de Betti représentent une relation entre un intervalle entre le rayon de naissance et le rayon de mort, et un nombre de Betti représentant un nombre de trous pour chaque dimension de trou ;
**caractérisé par**
un calcul d'une distance entre les données de séquences de nombres de Betti générées et d'autres données de séquences de nombres de Betti qui sont générées pour une deuxième période qui est un temps prédéterminé avant la première période ; et
une fourniture en sortie, lorsque la distance est supérieure ou égale à une valeur prédéterminée, d'informations indiquant qu'un changement d'un état qui est représenté par les données de séries temporelles multidimensionnelles s'est produit pendant la première période.

2. Programme selon la revendication 1, dans lequel le processus d'homologie persistante est un processus de comptage d'un nombre de Betti dans un cas où des rayons de sphères centrant chacune chaque point contenu dans l'attracteur sont augmentés au fil du temps.

3. Procédé mis en oeuvre par un ordinateur (1), pour détecter un changement d'un état d'un objet ou d'un environnement représenté par des données de séries temporelles multidimensionnelles mesurées par un capteur sur la base d'un attracteur généré à partir de celles-ci, le procédé comprenant :
une lecture, à partir d'un espace de stockage, de données de séries temporelles multidimensionnelles qui incluent des valeurs d'ensembles de données de séries temporelles à chacun des instants inclus dans une première période ;
une génération d'un attracteur contenant une pluralité de points, chacun de la pluralité de points représentant des valeurs des ensembles de données de séries temporelles à un instant inclus dans la première période ;
une génération, en mettant en oeuvre un processus d'homologie persistante sur l'attracteur, de données de codes-barres de chaque dimension de trou, dans lequel un trou indique un élément dans un groupe d'homologie et les données de codes-barres indiquent un rayon de naissance et un rayon de mort d'un trou pour chaque dimension de trou ;
une génération de données de séquences de nombres de Betti à partir des données de codes-barres, dans laquelle les données de séquences de nombres de Betti représentent une relation entre un intervalle entre le rayon de naissance et le rayon de mort, et un nombre de Betti représentant un nombre de trous pour chaque dimension de trou ;
**caractérisé par**
un calcul d'une distance entre les données de séquences de nombres de Betti générées et d'autres données de séquences de nombres de Betti qui sont générées pour une deuxième période qui est un temps prédéterminé avant la première période ; et
une fourniture en sortie, lorsque la distance est supérieure ou égale à une valeur prédéterminée, d'informations indiquant qu'un changement d'un état qui est représenté par les données de séries temporelles multidimensionnelles s'est produit pendant la première période.

4. Dispositif (1), pour détecter un changement d'un état d'un objet ou d'un environnement représenté par des données de séries temporelles multidimensionnelles mesurées par un capteur sur la base d'un attracteur généré à partir de celles-ci, comprenant :
un premier générateur (101) configuré pour lire, depuis un espace de stockage, des données de séries temporelles multidimensionnelles qui incluent des valeurs d'ensembles de données de séries temporelles à chacun des instants inclus dans une première période, générer un attracteur contenant une pluralité de points, chacun de la pluralité de points représentant des valeurs des ensembles de données de séries temporelles à un instant inclus dans la première période, et générer, en mettant en oeuvre un processus d'homologie persistante sur l'attracteur, des données de codes-barres de chaque dimension de trou, dans lequel un trou indique un élément dans un groupe d'homologie et les données de codes-barres indiquent un rayon de naissance et un rayon de mort d'un trou pour chaque dimension de trou ;
**caractérisé par**
un second générateur (103) configuré pour générer des données de séquences de nombres de Betti à partir des données de codes-barres, dans lequel les données de séquences de nombres de Betti représentent une relation entre un intervalle entre le rayon de naissance et le rayon de mort, et un nombre de Betti représentant un nombre de trous pour chaque dimension de trou, et calculer une distance entre les données de séquences de nombres de Betti générées et d'autres données de séquences de nombres de Betti qui sont générées pour une seconde période qui est un temps prédéterminé avant la première période ; et
une unité de sortie (107) configurée pour fournir en sortie, lorsque la distance est supérieure ou égale à une valeur prédéterminée, des informations indiquant qu'un changement d'un état qui est représenté par les données de séries temporelles multidimensionnelles s'est produit pendant la première période.
